# EUROPÄISCHE PATENTANMELDUNG

(11) **EP 4 089 863 A1**
(43) Veröffentlichungstag der Anmeldung: **16.11.2022**
(21) Anmeldenummer: 22172428.9
(22) Anmeldetag: 10.05.2022
(51) Int. Cl.: H02G 5/00, B60R 16/03, H01R 13/502, H01R 13/53, H01R 13/11

(54) **DOPPELSTROMSCHIENE MIT EINEM ISOLATOR**

(30) Priorität: 11.05.2021 DE 102021112299
(71) Anmelder: Lisa Dräxlmaier GmbH, 84137 Vilsbiburg (DE)
(72) Erfinder: Himmel, Jörg, 84072 Au i. d. Hallertau (DE); Neumayer, Franziska, 84144 Geisenhausen (DE); Hammerl, Reinhold, 85748 Garching (DE)

(57) **Zusammenfassung**

Die vorliegende Erfindung bezieht sich auf eine Doppelstromschiene (100) mit einem Isolator (102), wobei die Doppelstromschiene (100) zwei außerhalb von Endbereichen (108, 110) durch eine Isolierung (106) gegeneinander isolierte, zu einem Stapel gestapelte Stromschienen (104) aufweist, wobei die Stromschienen (104) in den Endbereichen (108, 110) je eine Schnittstelle aufweisen und die Endbereiche (108, 110) unterschiedlich lang sind, wobei der Isolator (102) einen flächigen Trennbereich (112) sowie einen konturierten Schnittstellenbereich (126) aufweist, wobei der Trennbereich (112) so breit wie die Endbereiche (108, 110) und zumindest so lang wie der kürzere Endbereich (108) ist, wobei der Trennbereich (112) so dick wie ein Spalt zwischen den gestapelten Endbereichen (108, 110) ist, wobei der Trennbereich (112) zwischen den Endbereichen (108, 110) angeordnet ist und die Endbereiche (108, 110) voneinander isoliert, wobei der Schnittstellenbereich (126) zumindest eine der Schnittstellen zumindest bereichsweise isoliert.

## Beschreibung

### Technisches Gebiet

Die vorliegende Erfindung betrifft eine Doppelstromschiene mit einem Isolator.

### Stand der Technik

Die vorliegende Erfindung wird im Folgenden hauptsächlich in Verbindung mit Fahrzeugbordnetzen beschrieben. Die Erfindung kann aber in jeder Anwendung genutzt werden, in welcher elektrische Lasten, insbesondere große elektrische Lasten mit erheblichen Leistungen von beispielsweise mehr als 10kW bzw. mit erheblichen Spannungen von beispielsweise mehr als 100V, übertragen werden.

In einem Niedervolt-Bordnetz eines Fahrzeugs kann elektrisch leitendes Blech einer Karosserie als Masse verwendet werden, wodurch auf separate Rückleitungen verzichtet werden kann. So kann näherungsweise auf die Hälfte aller Kabel im Fahrzeug verzichtet werden.

Zum Übertragen großer elektrischer Lasten kann KFZ-Hochvoltspannung mit beispielsweise mehr als 300V oder sogar mehr als 700V verwendet werden. Für die KFZ-Hochvoltspannung können Stromschienen aus massivem Metallmaterial verwendet werden. Wenn Stromschienen verwendet werden, können aus Sicherheitsgründen separate Plus- und Minus-Schienen erforderlich sein. Die Plus- und Minus-Schienen können als Doppelschiene ausgebildet sein.

### Beschreibung der Erfindung

Eine Aufgabe der Erfindung ist es daher, unter Einsatz konstruktiv möglichst einfacher Mittel eine Doppelstromschiene mit einem verbesserten Isolator bereitzustellen. Eine Verbesserung kann hierbei beispielsweise eine verbesserte Montierbarkeit des Isolators und/oder eine verbesserte elektrisch Isolation der Stromschienen betreffen.

Die Aufgabe wird durch den Gegenstand des unabhängigen Anspruchs gelöst. Vorteilhafte Weiterbildungen der Erfindung sind in den abhängigen Ansprüchen, der Beschreibung und den begleitenden Figuren angegeben.

In einem elektrisch angetriebenen Fahrzeug sind auch bei KFZ-Hochvoltspannung große elektrische Stromflüsse erforderlich, um eine Antriebsleistung beziehungsweise Brems- oder Rekuperationsleistung zu übertragen. Rund um stromdurchflossene Leiter des Fahrzeugs werden durch die Stromflüsse elektromagnetische Felder erzeugt. Um eine Abstrahlung der Felder zu verringern oder auch zu verhindern, können die Leiter geschirmt werden. Alternativ oder ergänzend können die Leiter für die Hinleitung und die Rückleitung möglichst parallel und nah zusammen angeordnet werden, da sich die durch die entgegengesetzten Stromflüsse verursachten elektromagnetischen Felder gegenseitig auslöschen.

Auch bei Stromschienen können die Stromschiene für die Hinleitung und die Stromschiene für die Rückleitung sehr nahe zusammen angeordnet werden, indem die beiden Stromschienen deckungsgleich aufeinandergestapelt werden. Die gestapelten Stromschienen sind dabei einzeln elektrisch isoliert. Diese Anordnung kann als Doppelstromschiene bezeichnet werden.

Um den Effekt der Auslöschung auch an Kontaktstellen aufrecht zu erhalten, wird bei dem hier vorgestellten Ansatz eine Isolationskontur für ein Doppelschienen-Energieübertragungssystem vorgeschlagen, der eine Isolation der elektrischen Potenziale auch an der Kontaktstelle ermöglicht.

Es wird eine Doppelstromschiene mit einem Isolator vorgeschlagen, wobei die Doppelstromschiene zwei außerhalb von Endbereichen durch eine Isolierung gegeneinander isolierte, zu einem Stapel gestapelte Stromschienen aufweist, wobei die Stromschienen in den Endbereichen je eine Schnittstelle aufweisen und die Endbereiche unterschiedlich lang sind, wobei der Isolator einen flächigen Trennbereich sowie einen konturierten Schnittstellenbereich aufweist, wobei der Trennbereich so breit wie die Endbereiche und zumindest so lang wie der kürzere Endbereich ist, wobei der Trennbereich so dick wie ein Spalt zwischen den gestapelten Endbereichen ist, wobei der Trennbereich zwischen den Endbereichen angeordnet ist und die Endbereiche voneinander isoliert, wobei der Schnittstellenbereich zumindest eine der Schnittstellen zumindest bereichsweise isoliert.

Unter einer Stromschiene kann ein massiver Streifen Metallblech verstanden werden. Die Stromschiene kann beispielsweise aus einem Aluminiummaterial oder einem Kupfermaterial sein. Aluminium beziehungsweise Aluminiumlegierungen weisen eine gute elektrische Leitfähigkeit bei geringem Gewicht und geringen Materialkosten auf. Kupfer beziehungsweise Kupferlegierungen können eine höhere elektrische Leitfähigkeit als Aluminium beziehungsweise Aluminiumlegierungen aufweisen. Zusätzlich kann Kupfer beziehungsweise eine Kupferlegierung oxidationsbeständig sein und einen geringen Übergangswiderstand aufweisen. Die Stromschiene kann einen rechteckigen Leitungsquerschnitt aufweisen. Dabei kann die Stromschiene länglich sein und eine Länge von beispielsweise mehr als 0,5 m, vorzugsweise mehr als 1 m, und eine Breite von beispielsweise zwischen 0,5 cm und 10 cm, vorzugsweise zwischen 1 cm und 5 cm, aufweisen. Die Stromschiene kann ferner eine Dicke von beispielsweise zwischen 1 mm und 10 mm aufweisen. Die Stromschiene kann auf allen Seiten eine Isolierung aufweisen, d.h. von einer Isolierung umhüllt sein. Die Isolierung kann beispielsweise aus einem Kunststoffmaterial sein. Das Kunststoffmaterial kann ein Thermoplast sein. Die Stromschiene kann mit dem Thermoplast umspritzt sein. Die Isolierung kann Eigenschaften aufweisen, die für KFZ-Hochvoltspannung von bis zu 1000 Volt Gleichstrom ausgelegt sind. Insbesondere kann eine Materialstärke der Isolierung eine Durchschlagfestigkeit gegen die KFZ-Hochvoltspannung sicherstellen.

Eine Doppelstromschiene kann aus zwei Stromschienen mit gleichen Abmessungen bestehen. Die beiden Stromschienen können an Flachseiten aufeinandergestapelt sein. Die Stromschienen können auch einen geringen Abstand zueinander aufweisen. Die Stromschienen können deckungsgleich angeordnet sein. Die Doppelstromschiene kann mit einem Kunststoffmaterial ummantelt sein. Alternativ oder ergänzend kann die Doppelstromschiene mit einem Gewebematerial ummantelt sein. Das Gewebematerial kann beispielsweise als Gewebeband um die Doppelstromschiene gewickelt sein. In einem Endbereich kann die Stromschiene freiliegen, d.h. können z.B. die Isolierung und Ummantelung zumindest bereichsweise entfernt worden sein. Die Doppelstromschiene kann auch zusätzlich durch einen elektrisch leitenden Mantel gegen die Abstrahlung von elektromagnetischen Feldern geschirmt sein.

Die eine Stromschiene der Doppelstromschiene kann in verbautem Zustand mit einem Pluspotenzial der KFZ-Hochvoltspannung verbunden sein. Die andere Stromschiene der Doppelstromschiene kann mit einem Minuspotenzial der KFZ-Hochvoltspannung verbunden sein. Stromflüsse durch die beiden Stromschienen fließen so in entgegengesetzte Richtungen und sind gleich groß. Durch die räumliche Nähe der Stromschienen in der Doppelstromschiene kompensieren sich die resultierenden elektromagnetischen Felder im Wesentlichen vollständig.

Ein Isolator kann aus einem Kunststoffmaterial sein. Der Isolator kann insbesondere aus einem Thermoplast sein. Der Isolator kann ein unabhängig von der Doppelstromschiene gefertigtes, separates Bauteil sein. Der Isolator kann beispielsweise ein vorgefertigtes Spritzgussteil sein. Der Isolator kann ein Zwischenstück zum Anordnen zwischen den Stromschienen sein. Die Geometrie und Abmessungen des Isolators können bereits vor einem Zusammenbau mit den Stromschienen festgelegt sein. Der Isolator kann kraft- und/oder formschlüssig aber vorzugsweise nicht stoffschlüssig mit der Stromschiene verbunden sein. Der Isolator kann reversibel zwischen den Stromschienen positioniert werden. Falls nötig kann der Isolator beschädigungsfrei wieder von den Schienen gelöst werden.

Ein Trennbereich kann im Wesentlichen flächig und eben sein. Der Trennbereich kann an die Endbereiche der Stromschienen angepasst sein. Ein Schnittstellenbereich kann mehrdimensional geformt sein und eine Kontur zumindest eine der Schnittstellen zumindest teilweise abbilden.

Der Trennbereich kann entlang zumindest einer Seitenkante eine in einer Haupterstreckungsrichtung der Stromschienen ausgerichtete Führungsfläche aufweisen. Eine Führungsfläche kann senkrecht zu einer Oberfläche des Trennbereichs ausgerichtet sein. Die Führungsfläche kann ein herausrutschen der Trennbereichs aus dem Spalt zwischen den Endbereichen verhindern.

Der Trennbereich kann zumindest eine Führungsfläche für den kürzeren Endbereich und zumindest eine Führungsfläche für den längeren Endbereich aufweisen. Durch Führungsflächen für beide Endbereiche kann der Isolator die Stromschienen zueinander ausrichten und ein Verrutschen der Stromschienen relativ zueinander verhindern.

Die zumindest eine Führungsfläche kann eine Aussparung für eine seitlich aus dem längeren Endbereich ragende Schnittstellenlasche und/oder eine Aussparung für eine seitlich aus dem kürzeren Endbereich ragende Schnittstellenlasche der jeweiligen Schnittstelle aufweisen. Eine Schnittstellenlasche kann seitlich an den jeweiligen Endbereich anschließen. Die eigentliche Schnittstelle kann an der Schnittstellenlasche angeordnet sein. Durch die Aussparung kann eine Lage des Isolators in der Haupterstreckungsrichtung der Stromschienen fixiert sein.

Der Trennbereich kann zumindest eine quer zu der Haupterstreckungsrichtung der Stromschienen ausgerichtete Anschlagsfläche aufweisen. Eine Anschlagfläche kann eine Stirnseite einer der Stromschienen bedecken. Die Anschlagsfläche kann die Lage des Isolators in der Haupterstreckungsrichtung fixieren.

Der Trennbereich kann eine Anschlagsfläche für den kürzeren Endbereich und eine Anschlagsfläche für den längeren Endbereich aufweisen. Die Anschlagsflächen können beide Stirnseiten der Stromschienen isolieren.

Der Schnittstellenbereich kann an den Trennbereich anschließen und quer zu der Haupterstreckungsrichtung der Stromschienen ausgerichtet sein. Eine Kontaktierungsrichtung der Schnittstellen kann quer zu der Haupterstreckungsrichtung ausgerichtet sein. Der Schnittstellenbereich kann quer zu dem Trennbereich ausgerichtet sein.

Der Schnittstellenbereich kann zylinderförmig sein und dazu ausgebildet sein, eine auf dem längeren Endbereich als die Schnittstelle angeordnete Kontaktbuchse zu isolieren. Der Schnittstellenbereich kann auf einer Verlängerung des Trennbereichs angeordnet sein. Der Schnittstellenbereich kann als Hülle für die Kontaktbuchse ausgebildet sein.

Der Schnittstellenbereich kann einen ringförmigen Bereich zum Isolieren einer Stirnseite der Kontaktbuchse aufweisen. Der ringförmige Bereich kann einen Durchbruch für ein Gegenstück zu der Kontaktbuchse umschließen. Der ringförmige Bereich kann eine Berührsicherheit der Kontaktbuchse sicherstellen.

Der Schnittstellenbereich kann rippenförmig sein und dazu ausgebildet sein, die seitlich aus dem längeren Endbereich ragende Schnittstellenlasche von der seitlich aus dem kürzeren Endbereich ragenden Schnittstellenlasche zu isolieren. Der Schnittstellenbereich kann eine Rippe sein, die zwischen den Schnittstellenlaschen verläuft und diese gegeneinander elektrisch isoliert.

Der Schnittstellenbereich kann kreuzrippenförmig sein. Der Schnittstellenbereich kann eine kreuzförmige Querschnittsfläche aufweisen. Die Schnittstellenlaschen können in parallel versetzten Ebenen angeordnet sein. Die Schnittstellenlaschen können in diagonal entgegengesetzten Quadranten der Kreuzform angeordnet sein.

### Kurze Figurenbeschreibung

Nachfolgend wird ein vorteilhaftes Ausführungsbeispiel der Erfindung unter Bezugnahme auf die begleitenden Figuren erläutert. Es zeigen:
Fig. 1 eine Darstellung einer Doppelstromschiene mit einem Isolator gemäß einem Ausführungsbeispiel;
Fig. 2 eine Darstellung eines Isolators gemäß einem Ausführungsbeispiel;
Fig. 3 eine Darstellung einer Doppelstromschiene mit einem Isolator gemäß einem Ausführungsbeispiel; und
Fig. 4 eine Darstellung eines Isolators gemäß einem Ausführungsbeispiel.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

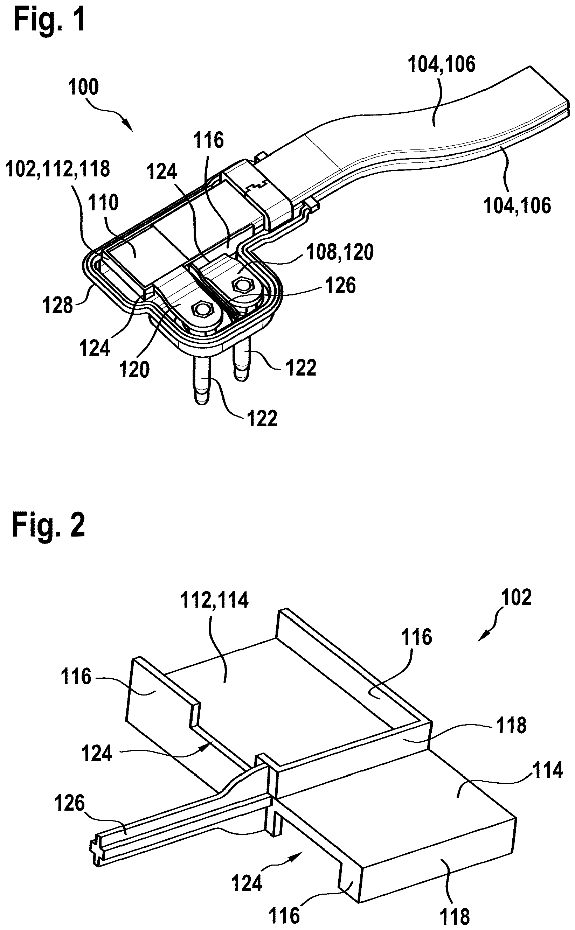

Zum leichteren Verständnis werden in der folgenden Beschreibung die Bezugszeichen zu den Figuren 1-4 als Referenz beibehalten.

Fig. 1 zeigt eine Darstellung einer Doppelstromschiene 100 mit einem Isolator 102 gemäß einem Ausführungsbeispiel. Fig. 2 zeigt eine Darstellung des Isolators 102.

Die Doppelstromschiene 100 weist zwei Stromschienen 104 auf, die jeweils von einer Isolierung 106 umhüllt sind. Endbereiche 108, 110 der Stromschienen 104 sind abisoliert und liegen blank. Die Stromschiene 104 mit einem kurzen Endbereich 108 liegt in Fig. 1 unter der Stromschiene 104 mit einem langen Endbereich 110. In Fig. 2 ist der Isolator umgedreht dargestellt.

Ein Trennbereich 112 des Isolators 102 ist zwischen den Endbereichen 108, 110 angeordnet worden und isoliert die Endbereiche 108, 110 voneinander. Die Endbereiche 108, 110 liegen mit Flachseiten auf einer Trennfläche 114 des Trennbereichs 112 auf. Der Trennbereich 112 weist an drei Seiten umlaufende Flächen auf. Führungsflächen 116 sind senkrecht zur Trennfläche 114 und in einer Haupterstreckungsrichtung der Stromschienen 104 ausgerichtet. Seitenflächen der Endbereiche 108, 110 liegen an den Führungsflächen 116 an. Der Isolator 102 ist durch die Führungsflächen 116 an den Endbereichen 108, 110 formschlüssig ausgerichtet.

Anschlagflächen 118 sind ebenfalls senkrecht zur Trennfläche 114 aber quer zu der Haupterstreckungsrichtung der Stromschienen 104 ausgerichtet. Stirnseiten der Endbereiche 108, 110 liegen an den Anschlagflächen 118 an. Durch die Anschlagflächen 118 ist der Isolator 102 in der Haupterstreckungsrichtung formschlüssig an den Stromschienen 104 ausgerichtet. Aufgrund der unterschiedlichen Längen der Endbereiche 108, 112 ist die Trennfläche 114 über die Anschlagfläche 118 für den kurzen Endbereich 108 hinaus verlängert und die Anschlagfläche 118 für den langen Endbereich 110 ist in der Haupterstreckungsrichtung versetzt zu der Anschlagfläche 118 für den kurzen Endbereich 108 angeordnet.

Die Endbereiche 108, 110 weisen jeweils eine Schnittstellenlasche 120 auf. Die Schnittstellenlaschen 120 ragen seitlich aus den Endbereichen 108, 110. An den Enden der Schnittstellenlaschen 120 sind hier Kontaktpins 122 als Schnittstellen der Doppelstromschiene 100 angeordnet. Die Kontaktpins 122 sind senkrecht zu den Schnittstellenlaschen 120 ausgerichtet. Die Führungsflächen 116 weisen Ausschnitte 124 für die Schnittstellenlaschen auf.

Ein Schnittstellenbereich 126 des Isolators 102 ist zwischen den Schnittstellenlaschen 120 angeordnet. Der Schnittstellenbereich 126 ragt seitlich aus dem Trennbereich 112. Der Schnittstellenbereich 122 ist hier rippenförmig insbesondere ist der Schnittstellenbereich 122 kreuzrippenförmig.

Die Endbereiche 108. 110 und der Isolator 102 werden durch ein Gehäuse 128 umschlossen. In Fig. 1 ist nur eine Hälfte des Gehäuses 128 dargestellt. Die Kontaktpins 122 ragen aus dem Gehäuse 128.

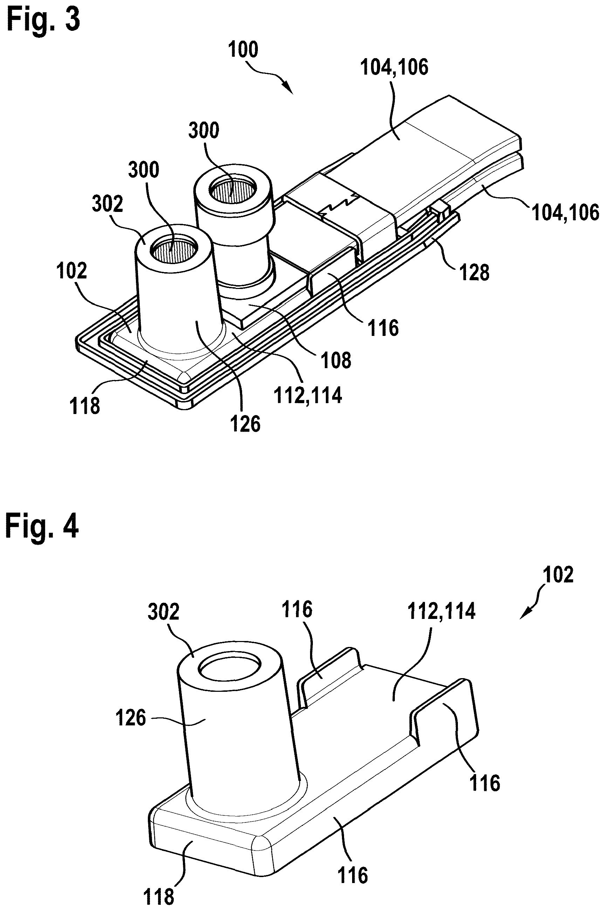

Fig. 3 zeigt eine Darstellung einer Doppelstromschiene 100 mit einem Isolator 102 gemäß einem Ausführungsbeispiel. Fig. 4 zeigt eine Darstellung des Isolators 102. Die Doppelstromschiene 100 entspricht im Wesentlich der Doppelstromschiene in Fig. 1. Im Gegensatz dazu weisen die Stromschienen 104 als die Schnittstellen der Doppelstromschiene 100 auf Flachseiten ihrer Endbereiche 108, 110 senkrecht zu der Haupterstreckungsrichtung ausgerichtete Kontaktbuchsen 300 auf.

Der Trennbereich 112 weist hier nur für den langen Endbereich 110 eine Anschlagfläche 118 auf. Der Schnittstellenbereich 126 ist hier zylinderförmig und umschließt die Kontaktbuchse 300 des langen Endbereichs 110. Der Schnittstellenbereich 126 weist ferner einen parallel zu der Trennfläche 114 ausgerichteten ringförmigen Bereich 302 auf. Der ringförmige Bereich 302 ist auf einer Stirnseite der Kontaktbuchse 300 angeordnet und isoliert die Stirnseite.

Die Kontaktbuchse 300 des kurzen Endbereichs 108 ist durch eine eigene Isolierkappe isoliert. Der Schnittstellenbereich 126 und die Isolierkappe ragen aus der nicht dargestellten Hälfte des Gehäuses 128.

Mit anderen Worten wird eine Isolationskontur für ein Doppelschienen-Energieübertragungssystem vorgestellt.

Zur Übertragung elektrischer Energie können neben klassischen Rundleiter- und Einzelschienensystemen im Bereich der E-Mobilität auch Doppelschienensysteme eingesetzt werden, da sie durch Feldauslöschung Vorteile bezüglich geringerer elektromagnetischer Feldabstrahlung aufweisen. Die Feldauslöschung resultiert aus einer geometrischen Anordnung von deckungsgleich übereinanderliegenden Reckteckschienen in möglichst geringem Abstand zueinander. Für die Anbindung dieser Doppelschienensysteme an Komponenten wie Ladedosen, Schaltboxen oder Batterien sind Schnittstellen mit einem Kontaktierungssystem erforderlich.

Im Kontaktbereich sind die Schienenstränge von ihrem Isolationsmantel befreit, um die notwendige Zugänglichkeit für Füge- und Oberflächentechnologie zu schaffen. Die Betriebsspannungen im Rahmen der E-Mobilität stellen hinsichtlich Durchschlagfestigkeit und Vermeidung von Kriechstrecken im Kontaktbereich hohe Anforderungen an das Isolationskonzept im Schienenzwischenraum.

Der vorliegende Ansatz stellt eine Geometrie für Isolationsbauteile im Schienenzwischenraum zur Verfügung, die zum einen durch Abstandshalter die Schieneneinzelstränge auf vordefiniertem, EMV-optimalem Abstand zueinander hält, die elektrischen Potentiale zuverlässig voneinander trennt und durch Abdeckung der Kontaktflächen den Berührschutz sicherstellt.

Die grundsätzliche Geometrie verfügt über eine H-förmige Kontur mit seitlichen Finnen zur Kriechstreckenverlängerung. Sie wird vom Ende des Doppelschienenstrangs her auf die Schienenenden aufgeschoben und durch Verclipsen arretiert. Zudem kann die Isolationsgeometrie eines oder beide Kontaktstücke des Schnittstellenteilstücks (Stecker oder Header) abdecken, um zusätzlich die Anforderungen an den Berührschutz zu erfüllen.

Alternativ können Gehäuse um Doppelschienensysteme mittels Vergussmasse ausgefüllt und die Räume zwischen den Kontaktteilen so verfüllt werden. Das Vergießen ist jedoch zeitaufwändig im Produktionsprozess (Einfüll- und Aushärtzeit). Unentdeckte Lufteinschlüsse (Lunker) können zwischen den Kontaktteilen Kriechstrecken ermöglichen. Es ergibt sich ein hohes Bauteilgewicht, da die Vergussmasse das Gehäusevolumen meist vollständig ausfüllt.

Im Rahmen der steigenden elektrischen Leistungsanforderungen im Rahmen der E-Mobilität rückt der Aspekt des Insassenschutzes vor elektromagnetischen Belastungen (ICNIRP) immer stärker in den Fokus. Hochvolt (HV)-Doppelschienensysteme können hohe Energiemengen bei gleichzeitig geringer elektromagnetischer Feldabstrahlung transportieren. Das Schienensystem benötigt geeignete außenraumtaugliche Schnittstellen.

Die Isolation der Kontaktteile durch eine einlegbare Isolationsgeometrie ist günstiger, leichter, zuverlässiger und fertigungsprozessual schneller und einfacher umsetzbar als die bisherige Lösung durch Vergießen. Die Isolationsteile können auf Vorrat produziert werden und ermöglichen Demontage und Wiedermontage der Gehäusebauteile im Schadens- bzw. Recyclingfall.

Die Abbildungen zeigen die Isolationen im aufgeschobenen Zustand. Der Schienenzwischenraum wird im Kontaktbereich von den Isolationskonturen ausgefüllt. Fig. 1 zeigt das Kontaktierungsbeispiel einer sogenannten Laschenverschraubung. Beim Laschenkontakt stellt das Isolationbauteil durch Abstandsfinnen den geeigneten Abstand für die Einhaltung der Kriechstrecken sicher. Fig. 2 zeigt eine isometrische Ansicht des Isolationskonzepts am Beispiel des Laschenkontakts. Zu erkennen sind die Funktionsmerkmale der seitlichen Führungen für die Aluminiumschienen sowie die Abstandsfinnen am Isolationsdorn, der für die Einhaltung der Kriechstrecken zwischen den Anschraublaschen sorgt.

Beim Buchsenkontakt in Fig. 3 übernimmt die Isolation durch Abdeckung des Kontakts oben zudem die Funktion des Berührschutzes. Der Zusammenbau ist jeweils in die untere Gehäusehälfte eingelegt, die obere Gehäusehälfte ist nicht dargestellt. Fig. 4 zeigt eine isometrische Ansicht des Isolationskonzepts am Beispiel des Buchsenkontakts. Zu erkennen sind auch hier die Funktionsmerkmale der seitlichen Führungen für die Aluminiumschienen. Die Einhaltung der Kriechstrecken übernimmt hier die Abdeckung der einen Kontaktbuchse durch den Isolatordom, der zugleich auch den Kontakt zur Gewährleistung des Berührschutzes abdeckt.

Da es sich bei der vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft

### BEZUGSZEICHENLISTE

- 100: Doppelstromschiene
- 102: Isolator
- 104: Stromschiene
- 106: Isolierung
- 108: kurzer Endbereich
- 110: langer Endbereich
- 112: Trennbereich
- 114: Trennfläche
- 116: Führungsfläche
- 118: Anschlagfläche
- 120: Schnittstellenlasche
- 122: Kontaktpin
- 124: Aussparung
- 126: Schnittstellenbereich
- 128: Gehäuse

- 300: Kontaktbuchse
- 302: ringförmiger Bereich

## Patentansprüche

1. Doppelstromschiene (100) mit einem Isolator (102), wobei die Doppelstromschiene (100) zwei außerhalb von Endbereichen (108, 110) durch eine Isolierung (106) gegeneinander isolierte, zu einem Stapel gestapelte Stromschienen (104) aufweist, wobei die Stromschienen (104) in den Endbereichen (108, 110) je eine Schnittstelle aufweisen und die Endbereiche (108, 110) unterschiedlich lang sind, wobei der Isolator (102) einen flächigen Trennbereich (112) sowie einen konturierten Schnittstellenbereich (126) aufweist, wobei der Trennbereich (112) so breit wie die Endbereiche (108, 110) und zumindest so lang wie der kürzere Endbereich (108) ist, wobei der Trennbereich (112) so dick wie ein Spalt zwischen den gestapelten Endbereichen (108, 110) ist, wobei der Trennbereich (112) zwischen den Endbereichen (108, 110) angeordnet ist und die Endbereiche (108, 110) voneinander isoliert, wobei der Schnittstellenbereich (126) zumindest eine der Schnittstellen zumindest bereichsweise isoliert.

2. Doppelstromschiene (100) gemäß Anspruch 1, bei dem der Trennbereich (112) entlang zumindest einer Seitenkante eine in einer Haupterstreckungsrichtung der Stromschienen (104) ausgerichtete Führungsfläche (116) aufweist.

3. Doppelstromschiene (100) gemäß Anspruch 2, bei dem der Trennbereich (112) zumindest eine Führungsfläche (116) für den kürzeren Endbereich (108) und zumindest eine Führungsfläche (116) für den längeren Endbereich (110) aufweist.

4. Doppelstromschiene (100) gemäß einem der Ansprüche 2 bis 3, bei dem die zumindest eine Führungsfläche (116) eine Aussparung (124) für eine seitlich aus dem längeren Endbereich (110) ragende Schnittstellenlasche (120) und/oder eine Aussparung (124) für eine seitlich aus dem kürzeren Endbereich (108) ragende Schnittstellenlasche (120) aufweist.

5. Doppelstromschiene (100) gemäß einem der vorhergehenden Ansprüche, bei dem der Trennbereich (112) zumindest eine quer zu einer Haupterstreckungsrichtung der Stromschienen (104) ausgerichtete Anschlagsfläche (118) aufweist.

6. Doppelstromschiene (100) gemäß Anspruch 5, bei dem der Trennbereich (112) eine Anschlagsfläche (118) für den kürzeren Endbereich (108) und eine Anschlagsfläche (118) für den längeren Endbereich (110) aufweist.

7. Doppelstromschiene (100) gemäß einem der vorhergehenden Ansprüche, bei dem der Schnittstellenbereich (126) an den Trennbereich (112) anschließt und quer zu einer Haupterstreckungsrichtung der Stromschienen (104) ausgerichtet ist.

8. Doppelstromschiene (100) gemäß einem der vorhergehenden Ansprüche, bei dem der Schnittstellenbereich (126) zylinderförmig ist und dazu ausgebildet ist, eine auf dem längeren Endbereich (110) als die Schnittstelle angeordnete Kontaktbuchse (300) zu isolieren.

9. Doppelstromschiene (100) gemäß Anspruch 8, bei dem der Schnittstellenbereich (126) einen ringförmigen Bereich (302) zum Isolieren einer Stirnseite der Kontaktbuchse (300) aufweist.

10. Doppelstromschiene (100) gemäß einem der Ansprüche 1 bis 7, bei dem der Schnittstellenbereich (126) rippenförmig ist und dazu ausgebildet ist, eine seitlich aus dem längeren Endbereich (110) ragende Schnittstellenlasche (120) von einer seitlich aus dem kürzeren Endbereich (108) ragenden Schnittstellenlasche (120) zu isolieren.

11. Doppelstromschiene (100) gemäß Anspruch 10, bei dem der Schnittstellenbereich (126) kreuzrippenförmig ist.
